# EUROPEAN PATENT APPLICATION

(11) **EP 4 641 030 A1**
(43) Date of publication of application: **29.10.2025**
(21) Application number: 22969173.8
(22) Date of filing: 20.12.2022
(51) Int. Cl.: F15B 15/14

(54) **CYLINDER DEVICE**

(71) Applicant: SMC Corporation, Tokyo 104-0031 (JP)
(72) Inventor: ONUKI, Kenta, Tsukubamirai-shi, Ibaraki 300-2493 (JP)
(74) Representative: Keil & Schaafhausen Patentanwälte PartGmbB
(86) International application number: PCT/JP2022/046941
(87) International publication number: WO 2024/134785

(57) **Abstract**

A cylinder device (10) comprises: a cylinder tube (12) having an opening (24) formed therein; a cover section (14) that is columnar and closes the open end (26) of the opening; and a stop ring (16) that has an inner part accommodated in an accommodation groove (32) in the cover section and an outer part engaged with an engagement groove (30) in the opening. A tapered section (28) increasing in diameter toward the open end is formed in the opening. The inner diameter of the tapered section in the open end is larger than the central diameter of the stop ring when not in an elastically deformed state.

## Description

### TECHNICAL FIELD

The present invention relates to a cylinder device.

### BACKGROUND ART

JP 2006-322484 A discloses a cylinder device. In the cylinder device, a rod guide is inserted into an opening portion of a cylinder, and the opening portion is closed by the rod guide. A stopper ring is provided between an accommodation groove formed in the outer periphery of the rod guide and an engagement groove formed in the inner wall of the opening portion. The stopper ring prevents the rod guide from coming off from the opening portion of the cylinder.

### SUMMARY OF THE INVENTION

In the cylinder device disclosed in JP 2006-322484 A, it is necessary to insert the rod guide into the cylinder in a state where the diameter of the stopper ring is reduced using a jig. Therefore, there is a problem that the difficulty level of the assembly work of the cylinder device is high.

The present invention has the object of solving the aforementioned problem.

A cylinder device according to an aspect of the present invention comprises: a cylinder tube in which an opening portion having a circular cross section is formed; a cover portion having a circular columnar shape, and inserted into the opening portion to close an open end of the opening portion; and a stop ring formed in an annular shape including a cut in a part of the annular shape, an inner portion of the stop ring being accommodated in an accommodation groove formed in an outer circumference of the cover portion, an outer portion of the stop ring being engaged with an engagement groove formed in an inner wall of the opening portion, wherein a first tapered portion whose diameter increases toward the open end is formed in the opening portion formed in the cylinder tube, an inner diameter of the first tapered portion at the open end is larger than a mean diameter of the stop ring in a state of not being elastically deformed, a tapered surface configured to guide the stop ring is formed in the accommodation groove, and the tapered surface is formed in a portion extending from a bottom surface of the accommodation groove to an outer circumferential surface of the cover portion.

According to the present invention, the assembly work of the cylinder device can be facilitated.

### BRIEF DESCRIPTION OF DRAWINGS

[FIG. 1] FIG. 1 is a perspective view of a cylinder device;
[FIG. 2] FIG. 2 is a cross-sectional view of the cylinder device;
[FIG. 3] FIG. 3 is a cross-sectional view of a cylinder tube;
[FIG. 4] FIG. 4 is a cross-sectional view of a cover portion;
[FIG. 5] FIG. 5 is a front view of a stop ring;
[FIG. 6] FIG. 6 is a diagram illustrating a method for assembling the cylinder tube and the cover portion;
[FIG. 7] FIG. 7 is a diagram illustrating a method for assembling the cylinder tube and the cover portion;
[FIG. 8] FIG. 8 is a perspective view of the cylinder device according to a first comparative example;
[FIG. 9] FIG. 9 is a cross-sectional view of the cylinder device according to the first comparative example;
[FIG. 10] FIG. 10 is a cross-sectional view of the cylinder device according to an embodiment;
[FIG. 11] FIG. 11 is a diagram illustrating a method for assembling the cylinder tube and the cover portion in the cylinder device according to a second comparative example;
[FIG. 12] FIG. 12 is a diagram illustrating a method for assembling the cylinder tube and the cover portion in the cylinder device according to the embodiment; and
[FIG. 13] FIG. 13 is a diagram illustrating a method for assembling the cylinder tube and the cover portion in the cylinder device according to the embodiment.

### DETAILED DESCRIPTION OF THE INVENTION

### [Embodiment]

### [Configuration of Cylinder Device]

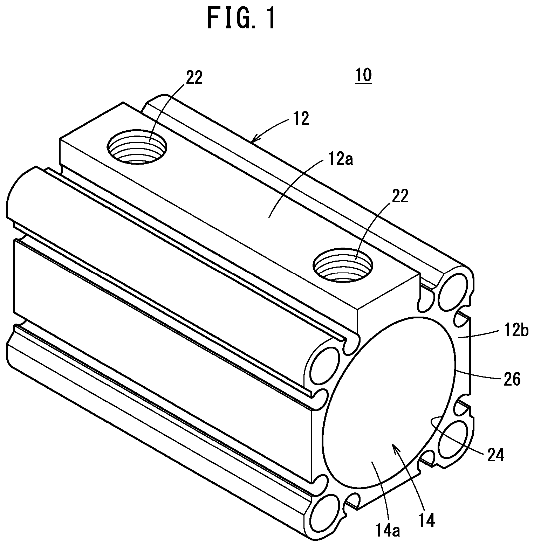

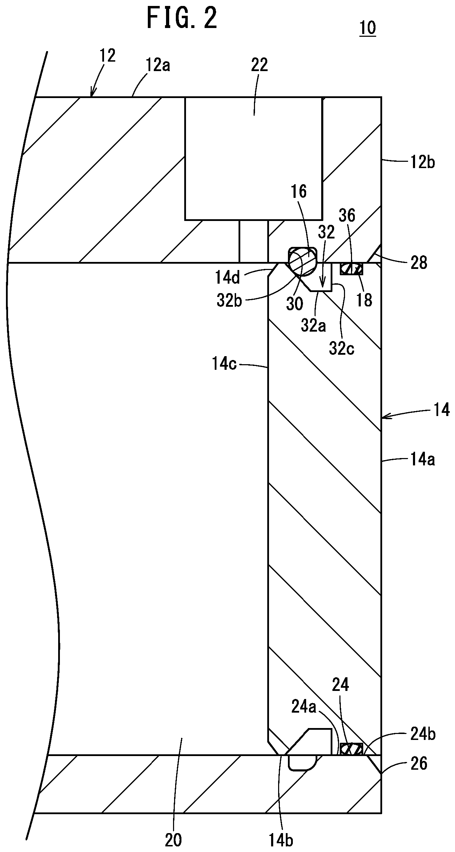

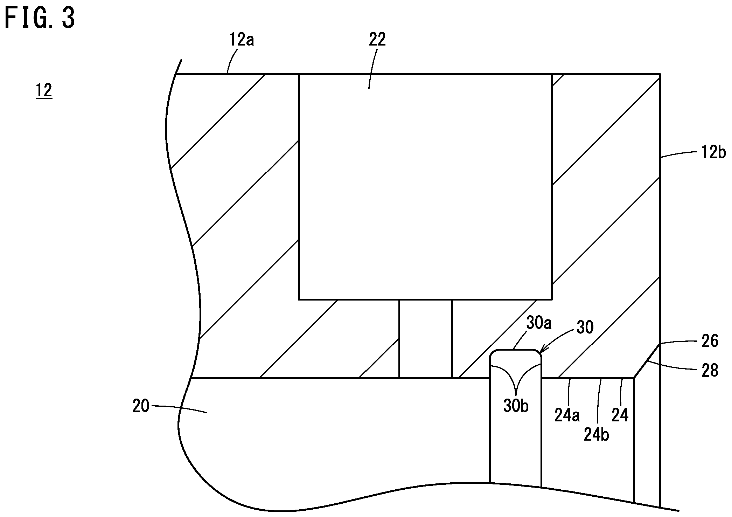

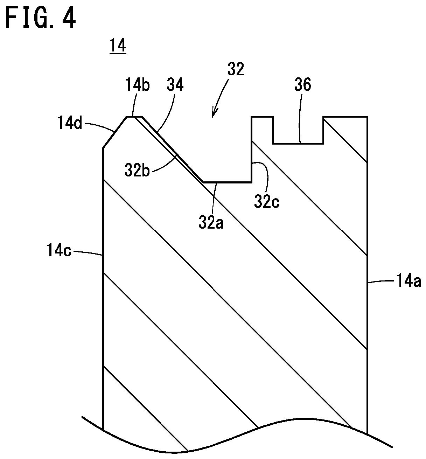

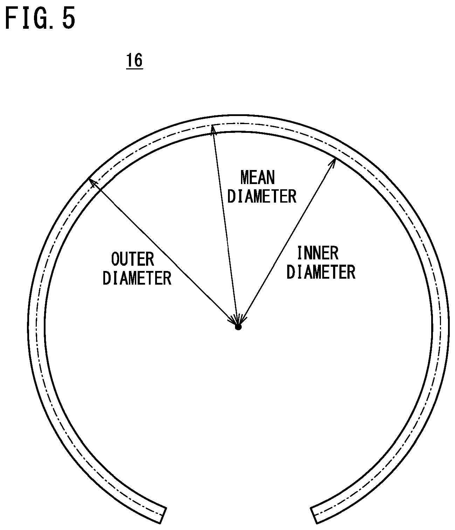

FIG. 1 is a perspective view of a cylinder device 10 according to the present embodiment. FIG. 2 is a cross-sectional view of the cylinder device 10. FIG. 3 is a cross-sectional view of a cylinder tube 12. FIG. 4 is a cross-sectional view of a cover portion 14. FIG. 5 is a front view of a stop ring 16.

The cylinder device 10 is, for example, an air cylinder, but is not limited thereto. As shown in FIG. 2, the cylinder device 10 includes the cylinder tube 12, the cover portion 14, the stop ring 16, and an O-ring 18.

As shown in FIGS. 2 and 3, the cylinder tube 12 includes a hollow cylinder chamber 20 therein. As shown in FIG. 1, two ports 22 are opened in a side surface 12a of the cylinder tube 12. The ports 22 allow communication between the cylinder chamber 20 and the outside of the cylinder tube 12. Tubes (not shown) are connected to the ports 22. Air is supplied from the tubes to the cylinder chamber 20, and air is discharged from the cylinder chamber 20 into the tubes.

As shown in FIGS. 1, 2, and 3, an opening portion 24 is formed in an end surface 12b of the cylinder tube 12. The opening portion 24 allows communication between the cylinder chamber 20 and the outside of the cylinder tube 12. The opening portion 24 has a circular cross section. A tapered portion 28 whose diameter increases toward an open end 26 is formed in the opening portion 24. The tapered portion 28 corresponds to a first tapered portion of the present invention.

An engagement groove 30 is formed in an inner wall 24a of the opening portion 24 over the entire circumference. The outer portion of the stop ring 16 is engaged with the engagement groove 30. The depth of the engagement groove 30 is smaller than the wire diameter of the stop ring 16. As shown in FIG. 3, a curved surface is formed between a bottom surface 30a of the engagement groove 30 and a side surface 30b of the engagement groove 30.

The cover portion 14 is formed in a circular columnar shape. As shown in FIG. 2, the cover portion 14 includes an outer surface 14a, an outer circumferential surface 14b, and an inner surface 14c. A tapered portion 14d whose diameter decreases toward the inner surface 14c is formed on the outer circumferential surface 14b. The tapered portion 14d corresponds to a second tapered portion of the present invention.

The cover portion 14 is inserted into the opening portion 24 of the cylinder tube 12 and closes the open end 26 of the opening portion 24. The outer surface 14a is exposed to the outside of the cylinder tube 12. The outer surface 14a is located at the open end 26 of the opening portion 24. As a result, the outer surface 14a and the end surface 12b of the cylinder tube 12 are flush with each other.

An accommodation groove 32 is formed over the entire outer circumference of the cover portion 14. The inner portion of the stop ring 16 is accommodated in the accommodation groove 32. The depth of the accommodation groove 32 is larger than the wire diameter of the stop ring 16. As shown in FIG. 4, the accommodation groove 32 includes a bottom surface 32a, an inclined side surface 32b, and a side surface 32c. The inclined side surface 32b is located between the side surface 32c and the inner surface 14c. The side surface 32c is located between the inclined side surface 32b and the outer surface 14a. The inclined side surface 32b is formed from a tapered surface 34. The tapered surface 34 is formed over the entire portion extending from the bottom surface 32a of the accommodation groove 32 to the outer circumferential surface 14b of the cover portion 14.

An O-ring groove 36 is formed in the outer circumference of the cover portion 14 over the entire circumference. As shown in FIG. 2, the O-ring 18 is disposed in the O-ring groove 36. The O-ring 18 is in close contact with a seal surface 24b formed from a part of the inner wall 24a of the opening portion 24 of the cylinder tube 12. As a result, the space between the cover portion 14 and the inner wall 24a is sealed. As shown in FIG. 2, in a state where the cover portion 14 is inserted into the opening portion 24, the O-ring 18 is located between the stop ring 16 and the open end 26.

As shown in FIG. 5, the stop ring 16 is formed in an annular shape having a cut in a part thereof (formed in a C-shape). The stop ring 16 is elastically deformed to change the diameter thereof. The inner diameter of the tapered portion 28, which is formed in the opening portion 24 of the cylinder tube 12, at the open end 26 is larger than the mean diameter of the stop ring 16 in a state of not being elastically deformed. Further, the outer diameter of the cover portion 14 is larger than the inner diameter of the stop ring 16 in a state of not being elastically deformed. Furthermore, the outer diameter of the tapered portion 14d, which is formed on the outer circumferential surface 14b of the cover portion 14, at the inner surface 14c is smaller than the mean diameter of the stop ring 16 in a state of not being elastically deformed.

### [Method for Assembling Cylinder Tube and Cover Portion]

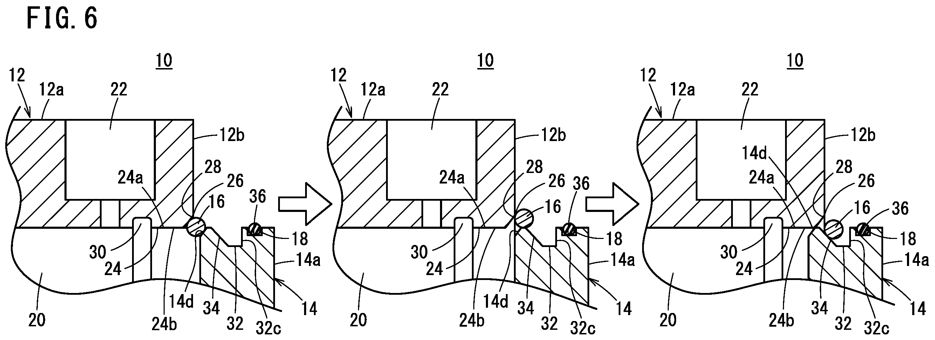

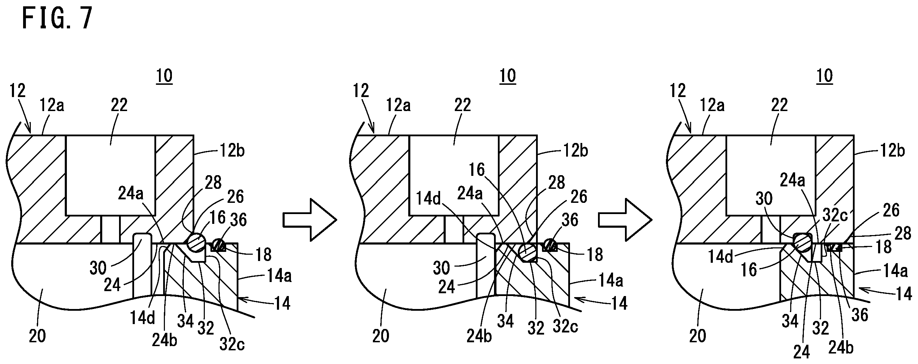

FIGS. 6 and 7 are diagrams each illustrating a method for assembling the cylinder tube 12 and the cover portion 14.

As shown in the left drawing of FIG. 6, the stop ring 16 is attached to the tapered portion 14d of the cover portion 14, and the O-ring 18 is attached to the O-ring groove 36.

Next, the cover portion 14 begins to be inserted into the opening portion 24 of the cylinder tube 12. At this time, the stop ring 16 is pushed in the right direction in FIG. 6 by the end surface 12b of the cylinder tube 12. As a result, as shown in the middle drawing of FIG. 6, the stop ring 16 is increased in diameter along the tapered portion 14d of the cover portion 14.

When the cover portion 14 is further inserted into the cylinder tube 12, the stop ring 16 moves to the right side in FIG. 6 relative to the cover portion 14. As a result, as shown in the right drawing of FIG. 6, the stop ring 16 is engaged with the accommodation groove 32. At this time, the stop ring 16 is brought into a state of not being elastically deformed.

When the cover portion 14 is further inserted into the cylinder tube 12, then as shown in the left drawing of FIG. 7, the stop ring 16 is pressed toward the tapered portion 28 of the cylinder tube 12 by the side surface 32c of the accommodation groove 32. As a result, the stop ring 16 is reduced in diameter along the tapered portion 28.

When the cover portion 14 is further inserted into the cylinder tube 12, then as shown in the middle drawing of FIG. 7, the entire stop ring 16 is accommodated in the accommodation groove 32.

As shown in the right drawing of FIG. 7, in the case where the outer surface 14a of the cover portion 14 is located at the open end 26 of the opening portion 24, the engagement groove 30 of the opening portion 24 and the tapered surface 34 of the cover portion 14 overlap each other in a side view. At this time, the stop ring 16 is increased in diameter while being guided by the tapered surface 34, and is engaged with the engagement groove 30. Thus, the assembly of the cylinder tube 12 and the cover portion 14 is completed.

### [Operational Effect]

### (Comparison between Present Embodiment and First Comparative Example)

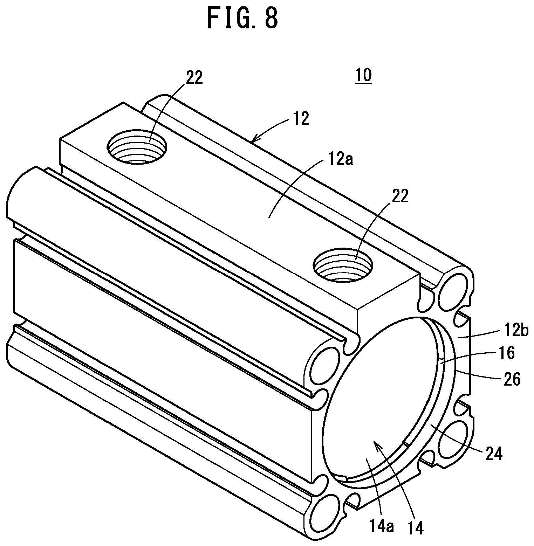

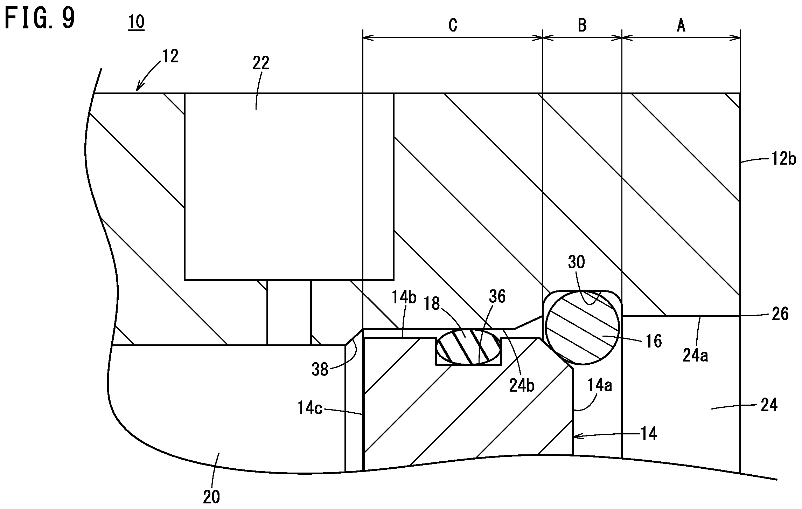

FIG. 8 is a perspective view of the cylinder device 10 according to a first comparative example. FIG. 9 is a cross-sectional view of the cylinder device 10 according to the first comparative example.

In the cylinder device 10 of the first comparative example, after the cover portion 14 is inserted to a position where the cover portion 14 abuts against a step portion 38 formed in the opening portion 24 of the cylinder tube 12, the stop ring 16 is inserted into the opening portion 24, and the outer portion of the stop ring 16 is engaged with the engagement groove 30. In a state where the stop ring 16 is engaged with the engagement groove 30, the inner portion of the stop ring 16 abuts against the outer surface 14a of the cover portion 14. The position of the cover portion 14 is thereby restricted between the step portion 38 and the stop ring 16. In this way, the cover portion 14 is positioned with respect to the cylinder tube 12.

A piston rod assembly moves inside the cylinder chamber 20 of the cylinder tube 12. In the case where the piston rod assembly moves toward the open end 26, the piston rod assembly collides with the cover portion 14. At this time, a large force acts on the cover portion 14 in a direction from the cylinder chamber 20 toward the open end 26. Therefore, the stop ring 16 with which the cover portion 14 comes into contact is required to have high strength. Further, the cylinder tube 12 supporting the cover portion 14 via the stop ring 16 is also required to have high strength.

In order to ensure the strength, it is necessary to increase the wire diameter of the stop ring 16, and it is necessary to increase the thickness of a portion between the engagement groove 30 and the end surface 12b. The width of the engagement groove 30 at the opening portion 24 of the cylinder tube 12 corresponds to the wire diameter of the stop ring 16. Therefore, in the case where the wire diameter of the stop ring 16 is increased, the width of the engagement groove 30 is also increased. Further, the seal surface 24b with which the O-ring 18 closely contacts needs to be provided on the inner wall 24a of the opening portion 24. As a result, the length of the opening portion 24 is at least the sum of a length A for ensuring the thickness of the cylinder tube 12, a length B for ensuring the width of the engagement groove 30, and a length C for securing the seal surface 24b. As a result, in the first comparative example, there is a problem that the longitudinal dimension of the cylinder device 10 increases.

Further, in the cylinder device 10 of the first comparative example, as shown in FIG. 8, the outer surface 14a of the cover portion 14 is located on the inner side of the end surface 12b of the cylinder tube 12, and a step is therefore formed between the outer surface 14a and the end surface 12b of the cylinder tube 12. Therefore, the cylinder device 10 of the first comparative example has a low design quality. Further, in the case where the cylinder device 10 of the first comparative example is used in an environment where water, dust, and the like are scattered, the water, dust, and the like accumulate in the step, which is not hygienic.

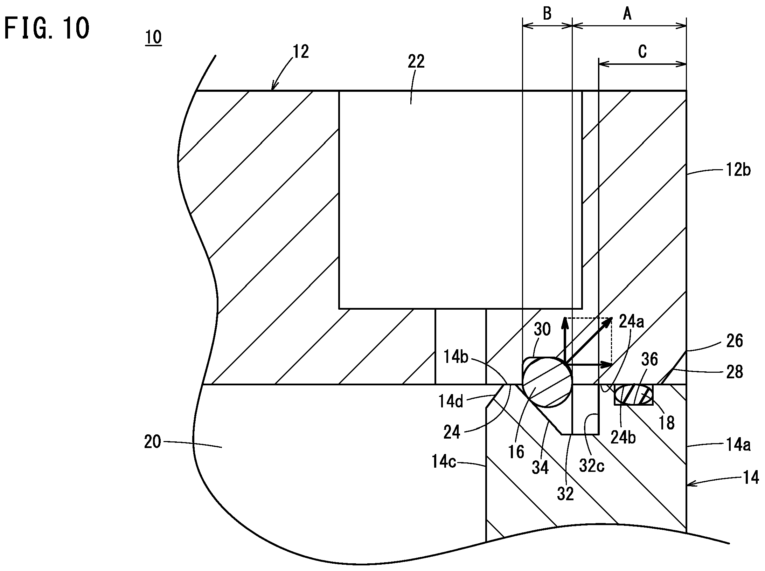

FIG. 10 is a cross-sectional view of the cylinder device 10 of the present embodiment. In the cylinder device 10 of the present embodiment, the outer portion of the stop ring 16 is engaged with the engagement groove 30 in the opening portion 24 of the cylinder tube 12, and the inner portion of the stop ring 16 is accommodated in the accommodation groove 32 of the cover portion 14. According to the cylinder device 10 of the present embodiment, since the cover portion 14 can be positioned with respect to the cylinder tube 12 by the stop ring 16, it is not necessary to form the step portion 38 in the opening portion 24.

In the cylinder device 10 of the present embodiment, the stop ring 16 and the cover portion 14 can be disposed so as to overlap each other in a side view. Further, in the cylinder device 10 of the present embodiment, a portion of the inner wall 24a of the opening portion 24 that is located between the engagement groove 30 and the end surface 12b can be used as the seal surface 24b with which the O-ring 18 is in contact. As a result, in the cylinder device 10 of the present embodiment, as shown in FIG. 10, the length of the opening portion 24 can be shortened while ensuring the length A for ensuring the thickness of the cylinder tube 12, the length B for ensuring the width of the engagement groove 30, and the length C for securing the seal surface 24b.

Further, in the cylinder device 10 of the present embodiment, the outer surface 14a of the cover portion 14 is located at the open end 26 of the opening portion 24, and therefore, the outer surface 14a and the end surface 12b of the cylinder tube 12 are flush with each other. As a result, the cylinder device 10 of the present embodiment can have high design quality. Furthermore, even in the case where the cylinder device 10 of the present embodiment is used in an environment where water, dust, and the like are scattered, the water, dust, and the like are less likely to accumulate in the cylinder device 10, which is hygienic.

In addition, in the cylinder device 10 of the present embodiment, a curved surface is formed between the bottom surface 30a and the side surface 30b of the engagement groove 30. Accordingly, in the cylinder device 10, the joint portion between the bottom surface 30a and the side surface 30b can be thickened compared to a case where the bottom surface 30a and the side surface 30b are formed at a right angle. This makes it possible to obtain the strength of the engagement groove 30.

Further, in the cylinder device 10 of the present embodiment, in the case where the piston rod collides with the cover portion 14, the tapered surface 34 of the accommodation groove 32 pushes the stop ring 16 obliquely with respect to the longitudinal direction of the cylinder tube 12. Therefore, as shown by arrows in FIG. 10, the force acting on the cylinder tube 12 from the stop ring 16 is dispersed. Accordingly, it becomes possible to reduce the strength required for the cylinder tube 12, and the wall thickness of the cylinder tube 12 can be reduced.

### (Comparison between Present Embodiment and Second Comparative Example)

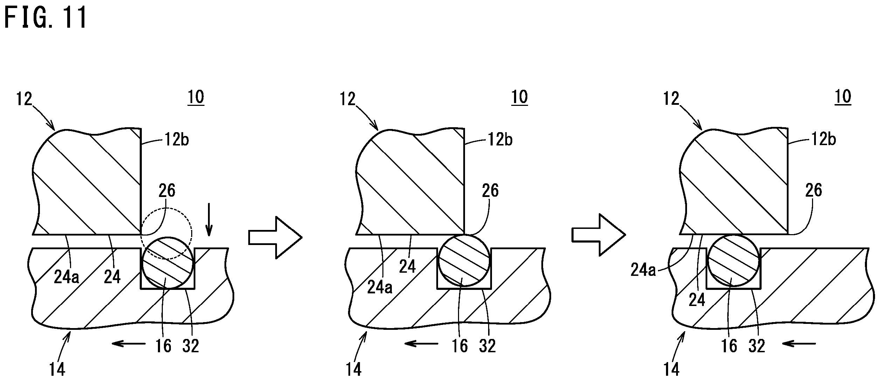

FIG. 11 is a diagram illustrating a method for assembling the cylinder tube 12 and the cover portion 14 in the cylinder device 10 according to a second comparative example. In the cylinder device 10 of the second comparative example, in the same manner as the cylinder device 10 of the present embodiment, the cover portion 14 is inserted into the opening portion 24 in a state where the stop ring 16 is attached to the accommodation groove 32. The cylinder device 10 of the second comparative example differs from the cylinder device 10 of the present embodiment in that the tapered portion 28 is not provided in the opening portion 24 of the cylinder tube 12.

In the cylinder device 10 of the second comparative example, it is necessary to insert the cover portion 14 into the opening portion 24 of the cylinder tube 12 while reducing the diameter of the stop ring 16. In the case where the diameter of the stop ring 16 is reduced, the operator applies a force to the stop ring 16 using a jig. Therefore, the difficulty level of the assembly work of the cylinder device 10 of the second comparative example is high.

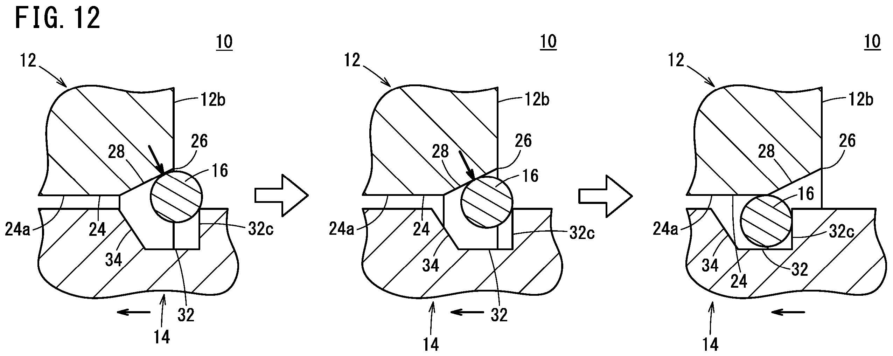

FIG. 12 is a diagram illustrating a method for assembling the cylinder tube 12 and the cover portion 14 in the cylinder device 10 according to the present embodiment. In the cylinder device 10 of the present embodiment, the opening portion 24 of the cylinder tube 12 includes the tapered portion 28. In the case where the operator moves the cover portion 14 in a state where the cylinder tube 12 is fixed and inserts the end portion of the cover portion 14 into the opening portion 24, the stop ring 16 is pressed against the tapered portion 28 by the side surface 32c of the accommodation groove 32 and is reduced in diameter along the tapered portion 28. As a result, the entire stop ring 16 is accommodated in the accommodation groove 32, and the stop ring 16 is inserted into the opening portion 24. Therefore, the cylinder device 10 of the present embodiment enables the difficulty level of the assembly work to be reduced. Since the difficulty level of the assembly work is low, the assembly work can be performed also by a robot or the like.

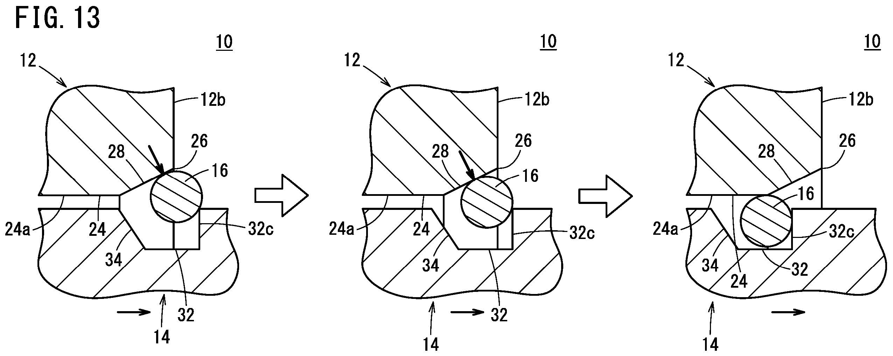

FIG. 13 is a diagram illustrating a method for assembling the cylinder tube 12 and the cover portion 14 in the cylinder device 10 according to the present embodiment. In the example shown in FIG. 12, the assembling method in the case where the operator moves the cover portion 14 in a state where the cylinder tube 12 is fixed and inserts the end portion of the cover portion 14 into the opening portion 24 has been described. In contrast thereto, the operator may move the cylinder tube 12 in a state where the cover portion 14 is fixed, and insert the end portion of the cover portion 14 into the opening portion 24.

As shown in the right drawing of FIG. 13, when the operator moves the cylinder tube 12 in a state where the cover portion 14 is fixed, the stop ring 16 is pushed by the tapered portion 28 and abuts against the side surface 32c of the accommodation groove 32. Thereafter, the stop ring 16 is pressed against the tapered portion 28 by the side surface 32c of the accommodation groove 32, and is reduced in diameter along the tapered portion 28. As a result, the entire stop ring 16 is accommodated in the accommodation groove 32, and the stop ring 16 is inserted into the opening portion 24.

### [Invention Obtained from Embodiment]

The invention that can be grasped from the above embodiment will be described below.

The cylinder device (10) includes: the cylinder tube (12) in which the opening portion (24) having a circular cross section is formed; the cover portion (14) having a circular columnar shape, and inserted into the opening portion to close the open end (26) of the opening portion; and the stop ring (16) formed in an annular shape including a cut in a part of the annular shape, an inner portion of the stop ring being accommodated in the accommodation groove (32) formed in the outer circumference of the cover portion, an outer portion of the stop ring being engaged with the engagement groove (30) formed in the inner wall (24a) of the opening portion, wherein the first tapered portion (28) whose diameter increases toward the open end is formed in the opening portion formed in the cylinder tube, the inner diameter of the first tapered portion at the open end is larger than the mean diameter of the stop ring in a state of not being elastically deformed, the tapered surface (34) configured to guide the stop ring is formed in the accommodation groove, and the tapered surface is formed in a portion extending from the bottom surface (32a) of the accommodation groove to the outer circumferential surface (14b) of the cover portion. According to this feature, in the case where the cover portion is inserted into the opening portion of the cylinder tube, the stop ring is pressed by the first tapered portion and the diameter thereof is reduced, and the stop ring is inserted into the opening portion together with the cover portion. Therefore, in the case where the cover portion is inserted into the opening portion of the cylinder tube, it is not necessary to perform an operation of reducing the diameter of the stop ring using a jig.

In the above-described cylinder device, a curved surface may be formed between the bottom surface (30a) of the engagement groove and the side surface (30b) of the engagement groove. According to this feature, it is possible to prevent the stop ring from falling off due to the peeling of the engagement groove.

The above-described cylinder device may further include the O-ring (18) disposed in the O-ring groove (36) formed in the outer circumference of the cover portion, and the O-ring may be located between the stop ring and the open end in a state where the cover portion is inserted into the opening portion. In order to support the cover portion via the stop ring, it is necessary to ensure the thickness of a portion between the engagement groove and the end surface of the cylinder tube. The portion between the engagement groove and the end surface of the cylinder tube can be used as a seal surface with which the O-ring closely contacts. This makes it possible to reduce the longitudinal dimension of the cylinder device.

In the above-described cylinder device, the outer surface (14a) of the cover portion may be located at the open end. As a result, water, dust, and the like are less likely to accumulate in the cylinder device, which is hygienic.

In the above-described cylinder device, the second tapered portion (14d) whose diameter decreases toward the inner surface (14c) of the cover portion may be formed on the outer circumferential surface of the cover portion. Conventionally, after a process of manually attaching the stop ring to the accommodation groove of the cover portion by an operator, a process of inserting the cover portion into the opening portion of the cylinder tube is performed. On the other hand, according to the present disclosure, in the process of inserting the cover portion into the opening portion of the cylinder tube, the stop ring is attached to the accommodation groove of the cover portion. Accordingly, the number of processes is reduced according to the present disclosure.

The present invention is not limited to the above disclosure, and various modifications are possible without departing from the essence and gist of the present invention.

### REFERENCE SIGNS LIST

10: cylinder device
12: cylinder tube
14: cover portion
14a: outer surface
14b: outer circumferential surface
14c: inner surface
14d: tapered portion (second tapered portion)
16: stop ring
18: O-ring
24: opening portion
24a: inner wall
26: open end
28: tapered portion (first tapered portion)
30: engagement groove
30a, 32a: bottom surface
30b: side surface
34: tapered surface
36: O-ring groove

## Claims

1. A cylinder device (10) comprising:
a cylinder tube (12) in which an opening portion (24) having a circular cross section is formed;
a cover portion (14) having a circular columnar shape, and inserted into the opening portion to close an open end (26) of the opening portion; and
a stop ring (16) formed in an annular shape including a cut in a part of the annular shape, an inner portion of the stop ring being accommodated in an accommodation groove (32) formed in an outer circumference of the cover portion, an outer portion of the stop ring being engaged with an engagement groove (30) formed in an inner wall (24a) of the opening portion,
wherein a first tapered portion (28) whose diameter increases toward the open end is formed in the opening portion formed in the cylinder tube,
an inner diameter of the first tapered portion at the open end is larger than a mean diameter of the stop ring in a state of not being elastically deformed,
a tapered surface (34) configured to guide the stop ring is formed in the accommodation groove, and
the tapered surface is formed in a portion extending from a bottom surface (32a) of the accommodation groove to an outer circumferential surface (14b) of the cover portion.

2. The cylinder device according to claim 1, wherein
a curved surface is formed between a bottom surface (30a) of the engagement groove and a side surface (30b) of the engagement groove.

3. The cylinder device according to claim 1, further comprising an O-ring (18) disposed in an O-ring groove (36) formed in the outer circumference of the cover portion, wherein
the O-ring is located between the stop ring and the open end in a state where the cover portion is inserted into the opening portion.

4. The cylinder device according to claim 1, wherein
an outer surface (14a) of the cover portion is located at the open end.

5. The cylinder device according to claim 1, wherein
a second tapered portion (14d) whose diameter decreases toward an inner surface (14c) of the cover portion is formed on the outer circumferential surface of the cover portion.
